# EUROPEAN PATENT APPLICATION

(11) **EP 2 626 141 A1**
(43) Date of publication of application: **14.08.2013**
(21) Application number: 12154503.2
(22) Date of filing: 08.02.2012
(51) Int. Cl.: B05B 13/06, B05C 7/02

(54) **A nozzle for applying a lining material onto an inner surface of a pipe**

(71) Applicant: Proline Group AB, 191 22 Sollentuna (SE)
(72) Inventor: Johansson, Rolf, 423 38 Torslanda (SE)
(74) Representative: Tholén, Johan

(57) **Abstract**

The present inventive concept relates to a nozzle for applying a lining material onto an inner surface of a pipe to create a lining in the pipe, comprising a radially inner space (107) for receiving the lining material, at least one outlet (111) arranged to allow lining material to leave the radially inner space (107) in at least a radially outward direction, and at least one distribution member (104) arranged radially outside the radially inner space (107) and arranged to rotate about the radially inner space such that the distribution member (104) during rotation passes by the at least one outlet and receives lining material leaving the radially inner space.

## Description

### Technical field

The present inventive concept relates to a nozzle for applying a lining material onto an inner surface of a pipe to create a lining in the pipe.

### Background of the invention

In the prior art, it is known to repair holes and cracks in pipes, such as water pipes, waste pipes, ventilation pipes, by providing an inner wall thereof with a lining or coating. This is sometimes referred to as relining of pipes. This is frequently used to repair pipes arranged underground or inside construction elements such as walls thereby avoiding replacement of worn out pipe sections which would be costly and cumbersome.

The prior art includes various devices for applying a lining to an inner wall of a pipe. Prior art devices frequently include a nozzle which rotates about an axis parallel to the centre axis of the pipe to be coated. US 5,951,761 discloses such a nozzle. The nozzle has the shape of a truncated cone and includes an inner space to which a coating material is delivered. The nozzle further includes radially directed apertures. Upon rotation of the nozzle the centrifugal force generated by the rotation of the nozzle will throw the coating material out from the inner space through the apertures and towards the inner wall of the tube.

Despite the various prior art nozzle designs there is still room for improvement. More specifically, it has been realized that there is a need for a nozzle design which facilitates application of a lining or a coating of uniform thickness on the inner walls of a pipe. It has further been realized that there is a need for a nozzle design which is practicable for lining materials selected from a wider range of different viscosities.

### Summary of the invention

In view of the above, an object of the present inventive concept is to provide a nozzle which facilitates application of a lining or a coating of uniform thickness on the inner walls of a pipe. It is a further object to provide a nozzle which may be conveniently used with lining materials of various different viscosities.

According to a first aspect of the present inventive concept, there is provided a nozzle for applying a lining material onto an inner surface of a pipe to create a lining in said pipe, comprising a radially inner space for receiving the lining material, at least one outlet arranged to allow lining material to leave the radially inner space in at least a radially outward direction, and at least one distribution member arranged radially outside the radially inner space and arranged to rotate about the radially inner space such that the at least one distribution member during rotation passes by the at least one outlet and receives lining material leaving the radially inner space.

In use of the nozzle, the at least one distribution member may thus pass by the at least one outlet and receive lining material leaving the radially inner space and accelerate the received lining material towards the inner surface of the pipe. Put differently, the material leaving the radially inner space may engage the at least one distribution member and become distributed, by the rotation of the distribution member, in at least a radially outward direction.

By the rotation of the at least one distribution member the received material may spread out over the surface of the distribution member before being released therefrom. This spreading out may contribute to an even distribution of the lining material. The rotation of the at least one distribution member may also distribute the received material by smashing it into quantized pieces or droplets. This "smashing" action makes the nozzle suitable for use with lining materials having a comparably high viscosity.

By providing at least one outlet the ejection of lining material from the radially inner space may conveniently be controlled by providing the at least one outlet at an appropriate position in relation to the at least one distribution member.

According to one embodiment the radially inner space is enclosed by a circumferentially and axially extending surface and wherein the at least one outlet is arranged in said surface. The lining material may thus be received inside a space defined by the surface (i.e. the radially inner space) prior to leaving the space via the at least one outlet. The ejection of lining material from the radially inner space may thus conveniently be controlled by providing the at least one outlet at an appropriate position in the surface.

According to one embodiment the at least one distribution member extends along the surface in an axial direction. The at least one distribution member may hence rotate along the surface in a circumferential direction and provide a way to control the axial distribution of lining material accelerated towards the inner surface of the pipe.

According to one embodiment the at least one distribution member comprises a radially inner edge extending along the surface in the axial direction, the radially inner edge being radially separated from the surface such that, in use of the nozzle, a portion of the lining material leaving the radially inner space forms a layer on the surface during rotation of the at least one distribution member. The layer thus formed may function both as a coolant for the at least one distribution members and the surface and as a supporting and friction reducing layer between the radially inner edge of the at least one distribution member and the surface.

According to one embodiment the at least one distribution member is connected to an end member arranged at an end of the circumferentially and axially extending surface, the end member being arranged to enclose a portion of said surface. The resulting overlap between the end member and the portion of the surface may prevent an undesired leakage of lining material from the radially inner space via other paths than the at least one outlet.

According to one embodiment the nozzle further comprises a rotational member extending axially through the radially inner space and being connected to the at least one distribution member for rotation thereof. This enables a simple and compact design of the nozzle. The rotational member may be connected to the at least one distribution member via the end member.

According to one embodiment the nozzle comprises a plurality of outlets arranged such that the at least one distribution member during a full rotation about the radially inner space simultaneously covers only a subset of said plurality of outlets. Thereby potentially undesirable pressure and/or flow variations in the lining material inside the radially inner space due to the passing of the at least one distribution member by the at least one outlet may be avoided.

According to one embodiment the at least one distribution member comprises a surface for receiving lining material leaving the radially inner space, the surface extending in an axial and radial direction and facing in the rotational direction of the distribution member. The lining material may thus be accelerated by and along the surface of the at least one distribution member. In particular the surface of the at least one distribution member may extend from a radially inner edge to a radially outer edge, wherein the nozzle may be arranged such that lining material released from the at least one distribution member passes said radially outer edge

According to one embodiment the distribution member comprises a first portion and a second portion, said first portion leading the second portion during rotation of the distribution member. This embodiment enables the distribution member to be shaped such that the performance of the nozzle may be improved. The first portion may be arranged closer to the radially inner space than the second portion. Thereby the surface of the at least one distribution member along which received lining material may be accelerated may be extended without increasing the radial extension of the at least one distribution member. The first portion may also be arranged closer to an axial end of the radially inner space than the second portion. The first portion may thus impart an axial acceleration component to lining material engaging the first portion of the at least one distribution member. In both of these designs the first and second portions may be connected by a sloped portion.

According to one embodiment the nozzle further comprises a mixing space for receiving at least a first and a second material component and being arranged to mix said material components to form the lining material. A coating material and a curing agent may thereby be provided as separate components to the nozzle. This enables application of a lining material which may cure quickly on the inner walls of the pipe without the risk of lining material curing inside e.g. a hose feeding lining material to the nozzle and thereby clogging the hose. A quickly curing lining material enables a thicker lining or layer to be applied in a single operation, thereby reducing the need to repeat the lining operation several times to obtain a lining of a desired thickness.

According to one embodiment the mixing space and the radially inner space are separate and axially distributed spaces, the radially inner space being arranged to receive the lining material from the mixing space. The material components may thus be thoroughly mixed before the lining material is received in the radially inner space.

According to an alternative embodiment the mixing space is arranged inside the radially inner space. This enables a nozzle with an axially more compact design.

According to one embodiment the nozzle further comprises a rotational member extending axially through the mixing space and the radially inner space and being connected to the at least one distribution member for rotation thereof, the rotational member comprising at least one stirring member arranged inside the mixing space. The rotational member may thus provide a double function in that it both may rotate the distribution members and mix the first and second material components.

Other objects, features and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of preferred embodiments of the present inventive concept, with reference to the appended drawings. In the drawings like reference numerals will refer to like elements.
Fig. 1 is a perspective view of a nozzle according to an embodiment in a disassembled condition;
Fig. 2 is a perspective view of the nozzle in Fig. 1 in an assembled condition;
Fig. 3 is a detail view of a distribution member of the nozzle in Fig. 2;
Fig. 4 is a detail view of a chamber member of the nozzle in Fig. 2;
Fig. 5 is a sectional view of the nozzle in Fig. 2.
Fig. 6 schematically illustrates the nozzle in Fig. 2 during operation inside a pipe;
Figs 7 and 8 schematically illustrate spreading out of material portions on a distribution member;
Figs 9-11 illustrate further embodiments of chamber members;
Figs 12-15 illustrate further embodiments of distribution members;
Fig. 16 illustrates a nozzle according to a further embodiment.

### Detailed description of preferred embodiments

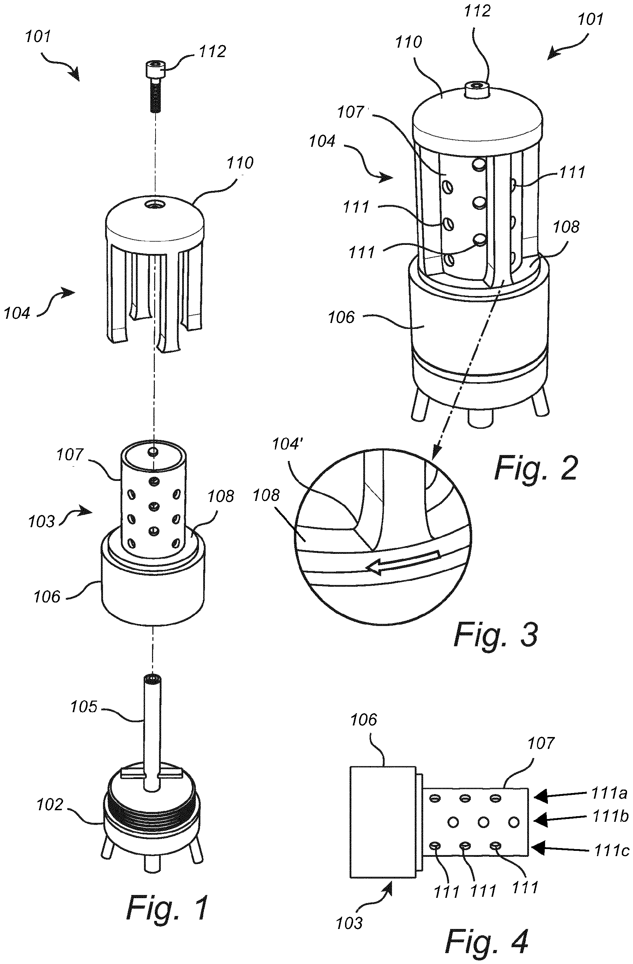

With reference to Figs 1-5 an embodiment of a nozzle 101 in accordance with the present inventive concept will be described.

Figs 1 and 2 illustrate the nozzle 101 in a disassembled and an assembled condition, respectively. The nozzle 101 includes a base member 102, a chamber member 103 and a set of distribution members 104. The base member 102, the chamber member 103 and the distribution members 104 are separate members which are adapted to be assembled. This modular design of the nozzle 101 provides for a convenient assembly of the nozzle 101. It may also allow easy replacement of a component should it become damaged during operation of the nozzle 101.

The nozzle 101 further comprises a rotational member in the form of a shaft 105. The shaft 105 is rotatably connected to the base member 102. The shaft 105 extends from an end surface of the base member 102, in a direction transverse to said end surface, thereby defining an axial direction of the nozzle 101.

The chamber member 103 comprises a mixing space 106 and a discharge space 107. The chamber member 103 is open at both axial ends thereof. The mixing space 106 and the discharge space 107 are each defined by an axially and circumferentially extending bounding surface. The bounding surface of the mixing space 106 delimits the mixing space 106 in a radial direction. The bounding surface of the discharge space 107 delimits the discharge space 107 in a radial direction. A radially extending surface 108 is arranged between the mixing space 106 and the discharge space 107. The surface 108 joins the bounding surfaces of the mixing space 106 and the discharge space 107.

The bounding surface of the discharge space 107 includes a plurality of outlets 111 for allowing lining material received in the discharge space 107 to leave the same as will be described in greater detail below. The plurality of outlets 111 of the nozzle 101 are arranged such that the distribution members 104 during a full rotation about the discharge space 107 simultaneously cover only a subset of the plurality of outlets 111. To facilitate understanding, Fig. 4 illustrates the chamber member 103 in isolation from the other parts of the nozzle 101. The outlets 111 are provided in the bounding surface of the discharge space 107 in circumferentially distributed rows of outlets 111a, 111b, 111c, each row 111a, 111b, 111c including a number of axially aligned outlets 111. The rows of each pair of adjacent rows 111a, 111b and 111b, 111c, respectively, are axially offset with respect to each other. At any angular position of the distribution members 104 only a portion of the outlets 111 will be covered by the distribution members 104. The number of outlets shown in the drawings is only an example and a nozzle in accordance with the inventive concept may include any number of outlets, however at least one outlet.

Returning to Figs 1 and 2 the distribution members 104 are connected to an end member 110. The distribution members 104 and the end member 110 may be integrally formed or joined by welding, gluing or the like. Each of the distribution members 104 extends from the end member 110 towards the mixing space 106. The distribution members 104 are axially elongate and extend along the bounding surface of the discharge space 107. The distribution members 104 are circumferentially distributed about the discharge space 107. The discharge space 107 forms a radially inner space with respect to the distribution members 104. The illustrated nozzle 101 includes four distribution members. However, a nozzle in accordance with the inventive concept is not limited to this specific number but may include fewer or more distribution members, however at least one distribution member.

The end member 110 has an outer a radial dimension which decreases along the axial direction away from the distribution members 104. This may facilitate transfer of the nozzle 101 past tight corners or turns in a tube to be relined. Although the illustrated end member 110 is provided with a rounded shape, the same advantage may be obtained with a cone-shaped end member.

In the assembled condition, the base member 102 and the end member 110 are arranged at opposite ends of the chamber member 103. The base member 102 may be said to form a front portion of the nozzle 101. The end member 110 may be said to form a rear portion of the nozzle 101.

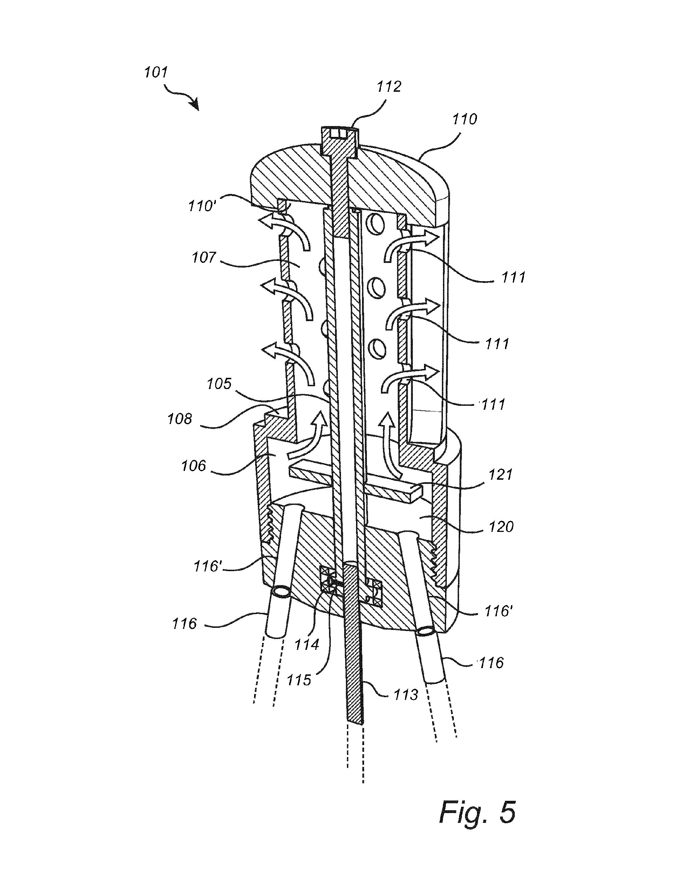

The shaft 105 extends between the opposite axial ends of the chamber member 103, through the mixing space 106 and the discharge space 107. This is clearly illustrated in Fig. 5 (which is a sectional view of the nozzle 101 when connected to a driving means in the form of a flexible wire 113). The distribution members 104 are connected to the shaft 105 via the end member 110. The end member 110 is arranged on the shaft 105. The end member 110 is fixed to the shaft 105 by means of a screw 112. The screw 112 is received in a hollow end portion of the shaft 105. The hollow end portion is provided with an internal thread. Connecting the end member 110 to the shaft 105 in this manner provides for a convenient assembly of the nozzle 101. Expressed in functional terms, the end member 110 and the distribution members 104 are removably connected to the shaft 105. This enables convenient replacement of the end member 110 and the distribution members 104 in case they would be damaged during operation of the nozzle 101. However, an end member may be connected to a shaft in other ways also such as by welding, gluing or they may be bolted together. Alternatively, an end member and a shaft may be integrally formed.

The chamber member 103 is provided with an internal thread and is screwed onto a corresponding external thread on the base member 102. Expressed in functional terms, the chamber member 103 is removably connected to the base member 102. By the removable connection of the end member 110 on the shaft 105 the chamber member 103 thus becomes removably arranged on the nozzle 101.

As mentioned above, the shaft 105 is rotatably connected to the base member 102. Referring to Fig. 5 the shaft 105 extends into a through-hole of the base member 102 from a first axial side thereof. In the through-hole, the shaft 105 is attached to the base member 102 by means of one or more bearings 114. The through-hole is arranged to receive an end portion of the wire 113 from a second axial side of the base member 102. The shaft 105 includes a hollow end portion for receiving the wire 113. The wire 113 is fixed inside the shaft 105 by a means of a screw 115. Alternatively, the wire may be bolted, welded or glued to the shaft 105.

By the arrangement of the nozzle 101 a rotation of the wire 113 will be transferred to the shaft 105 and further to the distribution members 104, via the end piece 110, wherein the distribution members 104 will rotate about the discharge space 107, along the bounding surface thereof and past the outlets 111. The volume swept by the distribution members 104 during rotation forms a radially outer space in relation to the radially inner space of the discharge space 107. The radially inner space communicates with the radially outer space via the outlets 111.

The relative axial lengths of the distribution members 104 and the discharge space 107 are preferably such that a gap is formed between the front facing end surfaces of the distribution members 104 and the surface 108. Thereby, undesired friction between the surface 108 and the distribution members 104 during rotation of the distribution members 104 may be avoided. Moreover, this gap is preferably smaller than the radial extension of the distribution members 104 in order to prevent accumulation of lining material at the end of the distribution members 104.

Fig. 3 is an enlarged perspective view of one of the distribution members 104 of the nozzle 101. The illustrated distribution member includes at the free end thereof an axial section 104' which presents a circumferential dimension which increases in a direction towards the free end of the distribution member. During rotation of the distribution member the surface of the axial section 104' facing in the direction of the rotation of the distribution member will lead an adjacent surface of the distribution member also facing in the direction of the rotation of the distribution member. The direction of rotation is indicated by the arrow in Fig. 3. The axial section 104' may thereby impart an axial acceleration component to material portions engaging the axial section 104'. The provision of the axial section 104' may prevent a build up of lining material on the surface 108. Such a build up could eventually lead to undesired axial leakage of lining material onto the non-rotating parts of the nozzle 101 and also clogging of the outlets 111 closest to the surface 108. Although the illustrated axial section 104' presents a sloping shape a similar advantage may be obtained by an axial section provided with a stepped shape and including one or more steps. For both alternatives, the sloping or stepped shape may be provided on one or both of the circumferentially facing sides of the distribution member. An advantage with the double-sided arrangement is that the above described effect may be provided regardless of the rotational direction of the distribution member.

The distribution members 104 may be arranged radially separated from the bounding surface of the discharge space 107. The radially inner edge of each one of the distribution members 104 may extend axially along the bounding surface of the discharge member 107 such that a radially extending gap is formed between said inner edge and said bounding surface. The edge may be separated from the bounding surface such that, during rotation of the distribution members 104, lining material leaving the discharge space 107 becomes distributed as a layer over a region of the bounding surface by the inner edge. The layer thus formed may provide a double-function in that it may both function as a coolant for the nozzle 101 and also act as a supporting and a friction reducing layer between the bounding surface of the discharge space 107 and the distribution members 104.

Referring to Fig. 5, the end member 110 is arranged to enclose a portion of the bounding surface of the discharge space 107. The end member 110 includes, in a surface facing the discharge space 107, a recess 110' arranged to receive an end portion of the bounding surface of the discharge space 107. The recess 110' has a lateral dimension exceeding an outer lateral dimension of the received end portion. The discharge space 107 is thus partly embedded in the end member 110. The relative lateral dimensions of the recess 110' and the received end portion may be such that the axially extending walls in the recess 110' abut against the bounding surface of the discharge space 107. Thereby, an axial leakage of lining material from the discharge space 107 may be prevented. Alternatively, said dimensions may be such that there is a small play between the walls in the recess 110' and the bounding surface. Preferably, the play is such that friction between the rotating end member 110 and the bounding surface of the discharge space 107 is prevented while the axial leakage of lining material still is prevented. In practice, the maximum amount of play still preventing the axial leakage may be based on the viscosity of the lining material and on the pressure on the lining material inside the discharge space 107.

As shown in the lower part of Fig. 5, the axial end of the base member 102 is further provided with inlets 116 for connection with a respective feeding hose. A hose may be connected to an inlet 116 by slipping an end of the hose onto the projecting portion of the inlet 116. According to the present embodiment the lining material to be distributed by the nozzle 101 is a multi-component material including a coating material and a curing agent (i.e. an activator). Each component is received at a separate one of the inlets 116. Each one of the inlets 116 communicate with the mixing space 116 via a respective channel 116' extending through the base member 102. As understood by those skilled in the art the choice of material may depend on both the application and the type of pipe in which the nozzle 101 is used. As a non-limiting example the coating material may include epoxy or polyester.

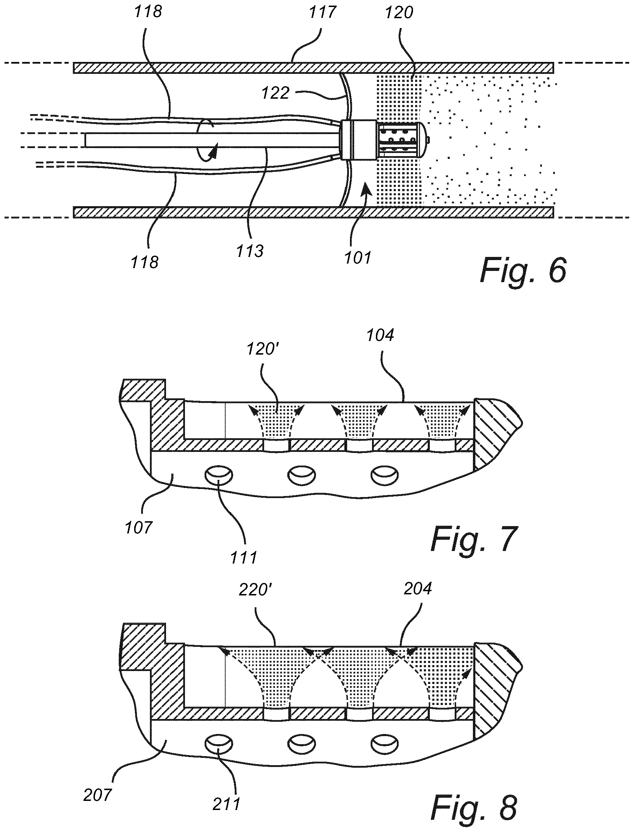

The function of the nozzle 101 during operation inside a pipe 117 to be relined will now be described with reference to Figs 5 and 6. The pipe 117 may be a pipe such as a water pipe, waste pipe or ventilation pipe arranged underground or inside a wall or other construction element, rendering it difficult to access the pipe from the outside. The nozzle 101 is maintained at an approximately central position within the pipe 117 by means of three or more flexible support members 122 extending radially from the front portion of the nozzle 101 to engage with the inner walls of the pipe 117. The support members 122 may for example be provided in the form of plastic rods. The nozzle 101 is connected to the wire 113 which is driven to rotate by driving means, such as an electrical motor, preferably arranged outside the pipe 117. Simultaneously the nozzle 101 is pulled through the pipe 117 with the front portion of the nozzle 101 leading the rear portion of the nozzle 101 (which in Fig. 6 corresponds to a direction of movement of the nozzle 101 from right to left). The coating material and the curing agent are pumped separately through the feeding tubes 118 to their respective inlets 116 by means of a pump preferably arranged outside the tube 117. The coating material and the curing agent enters the mixing space 106 wherein they are mixed together to form the lining material 120 to be applied inside the pipe 117. The mixing is aided by the stirring members 121 arranged on the rotating shaft 105. The coating material and the curing agent are fed to the mixing space 106 at such a pressure that the lining material 120 is forced to flow from the mixing space 106 into the discharge space 107 as schematically illustrated by the arrows in Fig. 5. From the discharge space 107, the lining material 120 is forced to flow out through the outlets 111. The lining material 120 flows from the radially inner space of the discharge space 107, through the outlets 111, and into the radially outer space swept by the distribution members 104.

A portion of lining material 120 entering the radially outer space via one of the outlets 111 may engage with one of the distribution members 104. A distribution member 104 may receive the portion of the lining material 120 upon passing an outlet. The rotation of the receiving distribution member may accelerate the received portion of the lining material 120 towards the inner surface of the pipe 117.

The acceleration of the portion of the lining material 120 may include both radial and circumferential components. For example, the portion of the lining material 120 may initially be received at a radially inner edge of the receiving distribution member. By the rotation of the receiving distribution member the material portion may flow along the surface of the receiving distribution member and be accelerated in a radial direction by the centrifugal force. Simultaneously, the rotation of the receiving distribution member may accelerate the material portion in the direction of the rotation. During rotation the material portion may become spread out over a region of the surface of the receiving distribution member. Eventually, the material portion may reach the radially outer edge of the receiving distribution member where it will be released from the receiving distribution member. The spread out material portion may then fly through the inner space of the pipe 117 and eventually reach the inner wall thereof. Hence, material portions from the outlets 111 may be distributed by the rotating distribution members 104 to form an axially distributed spray, fog or plume directed towards the inner wall of the pipe 117.

Fig. 7 schematically illustrates material portions 120' leaving the discharge space 107 via axially aligned outlets 111 and engaging the surface of the distribution member 104. Fig. 8 schematically illustrates similar material portions 220' leaving a discharge space 207 via axially aligned outlets 211 and engaging the surface of a distribution member 204 which differs from the distribution member 104 in that it is wider than the distribution member 104. In other words, the distribution member 204 has a larger radial dimension than the distribution member 104. For a given angular speed of the distribution member 104, the individual material portions 120' will have less time to spread out before reaching the radially outer edge of the distribution member 104 compared to the material portions 220'. In Fig. 8 the distribution member 204 has such a width (i.e. radial dimension) that the individual material portions 220' join along the axial direction of the distribution member 204. A wider distribution member may improve the uniformity of the distribution pattern.

The nozzle 101 is usable in combination with lining material presenting various different degrees of viscosity. The provision of the radially outer rotating distribution members 104 makes it possible to distribute the lining material 120 over the inner wall of the pipe 117 in a comparably uniform manner. In case the lining material 120 is of lower viscosity (such as a thin liquid like water or paint), the lining material 120 may leave the discharge space 107 in a continuous flow, become cut into material portions by the distribution members 104 and quickly spread out over the surfaces of the distribution members 104. In case the lining material 120 is of higher viscosity, the lining material 20 may spread out over the surfaces of the distribution members 104 to a lesser extent. At a sufficiently high viscosity (such as that of a semi-solid or slurry) the lining material 120 may even leave the discharge space 107 as quantized material portions or droplets. In any case, if an angular speed of the distribution members 104 exceeds a certain level (which level in practice will be dependent on the actual viscosity of the lining material 120) the distribution members 104 may hit the discharged material portions at such a speed that the material portions are burst into smaller pieces which directly leaves the surface of the distribution member 104 and travel towards the inner wall of the pipe 117.

It should be noted that the lining material need not necessarily be received by a passing distribution member immediately when leaving the outlet 111. Some time may pass until a distribution member 104 reaches the outlet 111. During this time the lining material may spread out on the bounding surface of the discharge space 107 in a region surrounding the outlet. In case lining material leaves the outlet 111 at high speed (i.e. due to high pressure in the discharge space 107), or if the outlet 111 is located at a level below the level of the discharge space 7, a lining material portion may even have released from the bounding surface and may thus be caught by the receiving distribution member in mid-air.

In practice, the faith of a material portion will be dependent on various factors such as the length of the time between each consecutive passing of an outlet by the distribution members, the rotational speed of the distribution members, the pressure in the discharge space 107 and the viscosity of the lining material 120 to name a few.

As a non-limiting example it is contemplated that the lining material may present a dynamic viscosity falling within the range of 20 000 mPa·s to 50 000 mPa·s. As a further non-limiting example it is contemplated that the distribution members 104 may rotate about the discharge space 107 at a rate falling within the range of 1000-50000 rpm. The actual rate may be based on the radial dimensions of the nozzle 101 in general and specifically on the radial dimensions of the distribution members 104. The rate may also be based on the viscosity of the lining material. For a higher viscosity a higher speed may be advantageous.

In the above the invention has mainly been described above with reference to a few embodiments. However, as is readily appreciated by a person skilled in the art, other embodiments than the ones disclosed above are equally possible within the scope of the inventive concept, as defined by the appended claims.

According to the above described embodiment of the nozzle 101, the chamber member 103 includes a mixing space 106 and a discharge space 107. It is however noted that a nozzle need not include a separate mixing space. Instead the mixing space 106 may be arranged inside the discharge space 107. A multi-component lining material may thus be received and mixed before leaving the radially inner space through the outlets 111. Optionally a set of stirring members similar to the stirring members 121 may be arranged inside the combined mixing and discharge space to aid mixing. It is further noted that a nozzle not including any mixing space at all also is contemplated. In such a nozzle, the lining material may be received at the nozzle in a ready-mixed state. Moreover, the lining material need not be a multi-component mixture but may include only a coating material without any added curing agent.

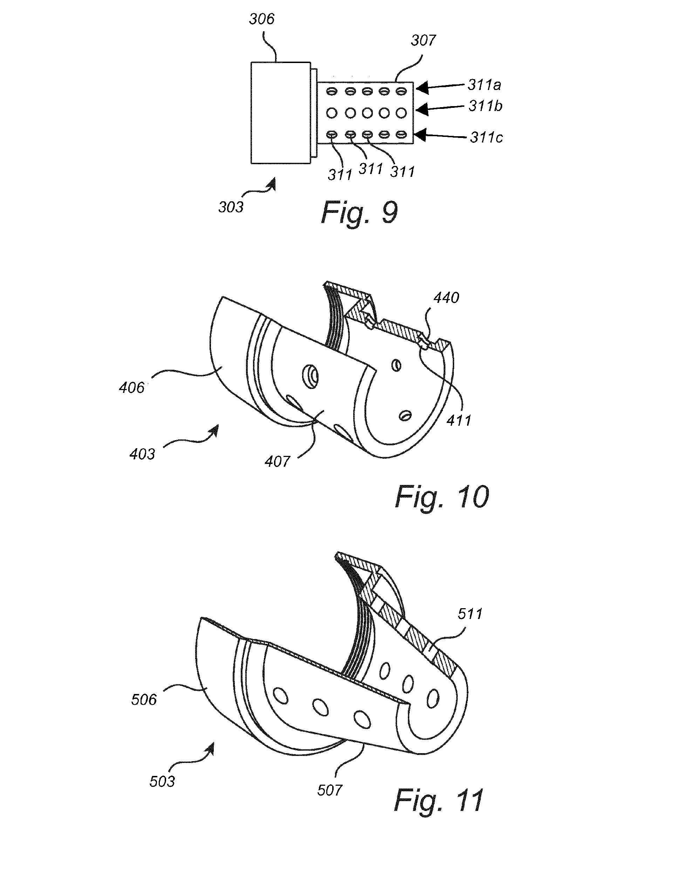

Fig. 9 illustrates a chamber member 303 according to a further alternative embodiment. The chamber member 303 may be used instead of the chamber member 103 in the nozzle 101. The chamber member 303 is similar to the chamber member 103 in that it includes a mixing space 306, a distribution space 307 and a plurality of outlets 311. The chamber member 303 however differs in the arrangement of the outlets 311. More specifically, the rows of outlets 311a, 311b, 311c are circumferentially aligned and not, as in chamber member 103, axially offset. The number of rows of outlets 311 preferably exceeds the number of distribution members 104 of the nozzle 101 wherein the distribution members 104 during a full rotation about the discharge space 307 simultaneously will cover only a portion of the outlets 311. As an alternative to the outlet distributions illustrated in Figs 4 and 9, the outlets 111, 311 may be provided in the bounding surface of the discharge space 107, 307 in a random distribution.

Fig. 10 illustrates a partly sectional perspective view of a chamber member 403 according to a further embodiment. The chamber member 403 may be used instead of the chamber member 103 in the nozzle 101. The chamber member 403 differs from the chamber member 103 in that the outlets 411 are arranged in a respective recess 440 provided in the bounding surface of the discharge space 407. The lateral dimension of the recess 440 exceeds the lateral dimension of the associated outlet 411. A recess 440 and an associated outlet 411 thus form a combined outlet presenting a lateral dimension which increases along a radially outward direction. A portion of lining material leaving the discharge space 407 may thus spread out before reaching the radially outer space swept by the distribution members 104.

Fig. 11 illustrates a partly sectional perspective view of a chamber member 503 according to a further embodiment. The chamber member 503 may be used instead of the chamber member 103 in the nozzle 101. Similar to the chamber member 103, the chamber member 503 includes a mixing space 506 and a discharge space 507. The discharge space 507 presents a radially decreasing dimension along an axial direction. The discharge space 507 thus presents a frusto-conical shape. This design may reduce pressure variations within the discharge space 507 along the axial direction. In an axial section close to the mixing space 506, which all lining material entering the discharge space 507 passes, the cross section is large. In an axial section farther from the mixing space 506, which only a portion of the lining material entering the discharge space 507 passes, the cross section is smaller.

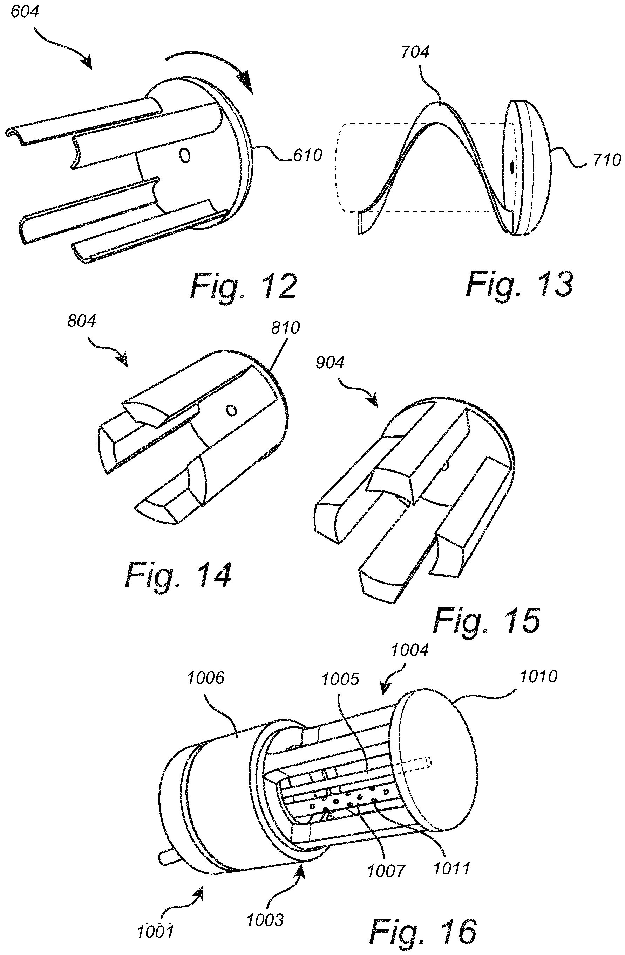

Fig. 12 illustrates a set of distribution members 604 according to a further embodiment. The distribution members 604 may be used instead of the distribution members 104 in the nozzle 101. Similar to the distribution members 104, the distribution members 604 are connected to an end member 610. The distribution members 604 are curved in a plane perpendicular to the elongate direction of the distribution members 604.

Fig. 13 illustrates a distribution member 704 according to a further embodiment. The distribution member 704 may be used instead of the distribution members 104 in the nozzle 101. Similar to the distribution members 104, the distribution member 704 is connected to an end member 710. The distribution member 704 is arranged to spiral about the discharge space whose outline for illustrative purposes is dashed in Fig. 13. By this design the distribution member 704 includes forward and backwards (with respect to the nozzle 101) facing surfaces. These surfaces may in addition to the radial and circumferential acceleration components also impart an axial acceleration component to received material portions. Thereby the axial extension of the distribution pattern may be increased.

Fig. 14 illustrates a set of distribution members 804 according to a further embodiment. The distribution members 804 may be used instead of the distribution members 104 in the nozzle 101. Similar to the distribution members 104, the distribution members 804 are connected to an end member 810. The distribution members 804 present a width in the circumferential direction which increases along a radially outward direction.

Fig. 15 illustrates a set of distribution members 904 similar to the distribution members 804 but different in that the distribution members 904 present a width in the circumferential direction which decreases along a radially outward direction.

A common feature of the distribution members 604, 704, 804, 904 is that they are shaped such that a portion of each distribution member leads or follows an adjacent portion of said distribution member in a rotational direction thereof (as indicated by the arrow in Fig. 12).

Fig. 16 illustrates a nozzle 1001 according to a further embodiment. The nozzle 1001 is similar to the nozzle 101 but differs by the design of the chamber member 1003. The mixing space 1006 of the chamber member 1003 is similar to the mixing space 106. However, the discharge space 1007 of the chamber member 1003 differs from the discharge space 107 in that the discharge space 1007 is arranged radially offset from the central axis of the nozzle 1001. Furthermore the bounding surface of the discharge space 1007 only surrounds a subset of the radially inner space about which the distribution members 1004 rotate. The discharge space 1007 may thus be said to form a thin tube 1007. The wall of the tube 1007 is provided with a plurality of outlets 1011 for allowing lining material to leave the tube in a radially outward direction.

## Claims

1. A nozzle for applying a lining material onto an inner surface of a pipe to create a lining in the pipe, comprising
a radially inner space for receiving the lining material,
at least one outlet arranged to allow lining material to leave the radially inner space in at least a radially outward direction, and
at least one distribution member arranged radially outside the radially inner space and arranged to rotate about the radially inner space such that the at least one distribution member during rotation passes by the at least one outlet and receives lining material leaving the radially inner space.

2. A nozzle according to claim 1, wherein the radially inner space is enclosed by a circumferentially and axially extending surface and wherein the at least one outlet is arranged in said surface.

3. A nozzle according to claim 2, wherein the at least one distribution member extends along the surface in an axial direction.

4. A nozzle according to claim 3, wherein the at least one distribution member is arranged to rotate along the surface in a circumferential direction.

5. A nozzle according to any of claims 2-3, wherein the at least one distribution member comprises a radially inner edge extending along the surface in the axial direction, the radially inner edge being radially separated from the surface such that, in use of the nozzle, a portion of the lining material leaving the radially inner space forms a layer on the surface during rotation of the at least one distribution member.

6. A nozzle according to any of claims 2-5, wherein the at least one distribution member is connected to an end member arranged at an end of the circumferentially and axially extending surface, the end member being arranged to enclose a portion of said surface.

7. A nozzle according to any of the preceding claims, further comprising a rotational member extending axially through the radially inner space and being connected to the at least one distribution member for rotation thereof.

8. A nozzle according to any of the preceding claims, wherein the nozzle comprises a plurality of outlets arranged such that the at least one distribution members during a full rotation about the radially inner space simultaneously covers only a subset of said plurality of outlets.

9. A nozzle according to any one of claims 1-8, wherein the at least one distribution member comprises a first portion and a second portion, said first portion leading the second portion during rotation of the at least one distribution member.

10. A nozzle according to claim 9, wherein the first portion is arranged closer to the radially inner space than the second portion.

11. A nozzle according to claim 9, wherein the first portion is arranged closer to an axial end of the radially inner space than the second portion.

12. A nozzle according to any of claims 9-11, wherein the first and second portions are connected by a sloped portion.

13. A nozzle according to any of the preceding claims, wherein the at least one distribution member comprises a surface for receiving lining material leaving the radially inner space, the surface extending in an axial and radial direction and facing in the rotational direction of the distribution member.

14. A nozzle according to claim 13, wherein the surface of the at least one distribution member extends from a radially inner edge to a radially outer edge, wherein the nozzle is arranged such that lining material released from the at least one distribution member passes said radially outer edge.

15. A nozzle according to any of the preceding claims, further comprising a mixing space for receiving at least a first and a second material component and being arranged to mix said material components to form the lining material.
